(19)

**Europäisches Patentamt**
**European Patent Office**
**Office européen des brevets**

(11) **EP 4 564 228 A1**

(12) **EUROPEAN PATENT APPLICATION**

(43) Date of publication:
04.06.2025 Bulletin 2025/23

(51) International Patent Classification (IPC):
*G06N 3/0455* (2023.01)

(21) Application number: 24216040.6

(22) Date of filing: 28.11.2024

(52) Cooperative Patent Classification (CPC):
G06N 3/0455

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.11.2023 US 202363604877 P
15.11.2024 US 202418949981

(71) Applicant: Samsung Electronics Co., Ltd.
Suwon-si, Gyeonggi-do 16677 (KR)

(72) Inventors:
• KIM, Soon Ju
San Jose, CA, 95134 (US)
• CHOI, Chiho
San Jose, CA, 95134 (US)
• YOO, Sangmin
San Jose, CA, 95134 (US)
• MALLA, Srikanth
San Jose, CA, 95134 (US)
• CHOI, Joon Hee
San Jose, CA, 95134 (US)

(74) Representative: Kuhnen & Wacker
Patent- und Rechtsanwaltsbüro PartG mbB
Prinz-Ludwig-Straße 40A
85354 Freising (DE)

(54) **SYSTEMS AND METHODS FOR CONTROLLING TRANSFORMERS IN ARTIFICIAL INTELLIGENCE**

(57) A system and a method for loop exit are disclosed. A unit scheduler includes a command queue, a report queue, an interface, and a unit controller. The command queue is configured to store commands for execution in an iterative procedure for an application using a transformer model with a multi-head attention, MHA, mechanism and a decoder. The report queue is configured to store status reports on the execution of the commands. The interface is configured to communicate with a host processor to receive the commands and to transmit the status reports. The unit controller is configured to determine a change of the iterative procedure based on a loop exit condition being met. The unit controller reports the loop exit condition in the report queue.

FIG. 1

**Description**

**TECHNICAL FIELD**

The disclosure generally relates to artificial intelligence (AI). More particularly, the subject matter disclosed herein relates to controlling transformers.

**BACKGROUND**

Artificial Intelligence (AI) has increasingly become popular in many applications including natural language processing, vision, content creation, arts, pattern recognition, robotics, etc. Generative AI is a technique that generates new content (e.g., text, images, audio, video) based on input data using deep-learning models. In typical query-response systems, these deep-learning models often require a large database that stores information from a variety of sources. The deep-learning models help the system to learn about the queries based on the knowledge collected from these sources and respond to the inquiries.

There are several disadvantages of the existing techniques in AI learning models. These include high computational costs, increased latency and processing time, and increased power consumption of computing elements used in the architecture.

**SUMMARY**

To overcome these issues, systems and methods are described herein for a technique of loop exit. The technique aims at terminating the iterations in the processing layers in a transformer. The technique is based on interactions between a system scheduler and a processing unit (PU) scheduler to determine a termination condition. A threshold is developed according to the application and operating environment. Loop exit of the iterations is achieved when the loop exit condition is less than the threshold. The above approaches improve on previous methods because they provide a faster response, reduced latency and processing time, lower usage of computing resources, and lower power consumption of computing elements.

The invention is set out in the appended claims

In an embodiment, a unit scheduler includes a command queue, a report queue, an interface, and a unit controller. The command queue is configured to store commands for execution in an iterative procedure for an application using a transformer model with a multi-head attention (MHA) mechanism and a decoder. The report queue is configured to store status reports on the execution of the commands. The interface is configured to communicate with a host processor to receive the commands and to transmit the status reports. The unit controller is configured to determine a change of the iterative procedure based on a loop exit condition being met. The unit controller reports the loop exit in the report queue.

In another embodiment, a host scheduler includes a command queue, a report queue, an interface, and a host controller. The command queue is configured to store commands for execution in an iterative procedure for an application using a transformer model with a multi-head attention (MHA) mechanism and a decoder. The report queue is configured to store status reports on the execution of the commands. The interface is configured to communicate with at least one processing unit in processing the commands and the status reports. The host controller is configured to issue the commands from the command queue to the at least one processing unit via the interface and to read the status reports from the report queue. The host controller determines a change of the iterative procedure based on a loop exit condition being met as reported in the status reports.

**BRIEF DESCRIPTION OF THE DRAWINGS**

In the following section, the aspects of the subject matter disclosed herein will be described with reference to exemplary embodiments illustrated in the figures, in which:

FIG. 1 is a block diagram illustrating a system according to an embodiment.

FIG. 2 is a diagram illustrating a loop exit (LE) platform with multiple processing units according to an embodiment.

FIG. 3 is a diagram illustrating an LE platform with multiple clusters of processing units according to an embodiment.

FIG. 4 is a diagram illustrating a host processor according to an embodiment.

FIG. 5 is a diagram illustrating a processing unit (PU) according to an embodiment.

FIG. 6 is a diagram illustrating a computational element in a PU according to an embodiment.

FIG. 7 is a flowchart illustrating an LE process at a PU according to an embodiment.

FIG. 8 is a diagram illustrating an LE process at a host processor according to an embodiment.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The term "iteration" as used herein refers to one computational pass as part of a loop. It may correspond to "layer" in a multi-layer architecture. As used herein, the term "loop exit" refers to an act of leaving an iterative process of a loop, either at the end of the loop, in the middle of the loop, or at the end of an iteration.

One learning model is large language models (LLMs) which involve huge sets of data. Examples of these LLMs include Generative Pre-trained Transformer (GPT) and Large Language Model Meta AI (LLAMA). A basic component of these models is a transformer. For language applications, a transformer takes a text sequence as input and produces another text sequence as output. In many query-response systems, a typical transformer includes several operations such as tokenization, positional encoding, multi-head attention (MHA), and feed-forward network. These operations are repeated across multiple layers to refine the quality of the output based on the model's understanding of the context embedded in the data. The number of layers is fixed (e.g., 96).

In an embodiment, a unit scheduler includes a command queue, a report queue, an interface, and a unit controller. The command queue is configured to store commands for execution in an iterative procedure for an application using a transformer model with a multi-head attention (MHA) mechanism and a decoder. The report queue is configured to store status reports on the execution of the commands. The interface is configured to communicate with a host processor to receive the commands and to transmit the status reports. The unit controller is configured to determine a change of the iterative procedure based on a loop exit condition being met. The unit controller reports the loop exit in the report queue.

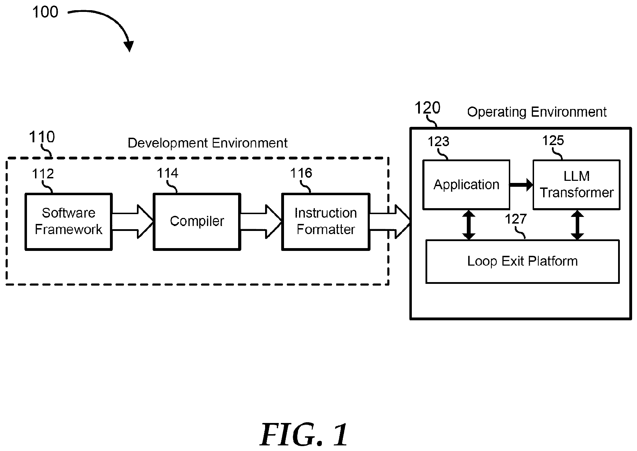

FIG. 1 is a block diagram illustrating a system 100 according to an embodiment. The system 100 includes a development environment 110 and an operating environment 120. The development environment 110 is where algorithms are developed, tested, and evaluated. The results of the development include instructions or commands that will be executed in the operating environment 120. The operating environment 120 may include the platform on which applications are to be executed to perform specified tasks.

In one embodiment, the development environment 110 may include a software framework 112, a compiler 114, and an instruction formatter 118. The development environment 110 may include more or less than the above elements. The software framework 112 provides development tools such as libraries and pre-built functions to facilitate algorithm development in a machine learning or deep learning environment. Examples of the software framework 112 may include Pytorch and TensorFlow. The software framework 112 generates codes for an application. The compiler 114 compiles the codes from the software framework 112 and generates a set of instructions that will be executed by processors in the operating environment 120. The instruction formatter 118 formats the set of instructions into commands in the proper format to be executed on a processor in the operating environment 120.

The operating environment 120 may include an application 123, a large language model (LLM) transformer 125, and a loop exit (LE) platform 127. The application 123 may include applications that are based on generative AI such as query and response system, chatbot, search engine, story generation, audio and video content creation, or any applications that create new content based on a large amount of domain-specific data. The LLM transformer 125 transforms input data, e.g., text data, into a different form that serves the objectives of the application 123. The LLM transformer 125 typically includes an encoder section and a decoder section. The encoder section encodes the input data, referred to as tokens, such as text into numerical representations so that they can be manipulated by a processor. The decoder section generates the output based on the numerical representations and a learning process. The output is in the format that is the same as that of the input. For example, if the input data is textual, then the output is also textual. The LLM transformer 125 typically employs an attention mechanism such as multi head attention (MHA) mechanism to generate relationships among the tokens. This process is an iterative procedure that involves many calculations such as matrix multiplication, softmax and dot product. The number of iterations is typically fixed. For a typical chatbot application, the number of iterations is 96. In addition, the process involves a very large amount of data. Because of the large amount of data and the number of iterations, there is an incentive to reduce the computational efforts.

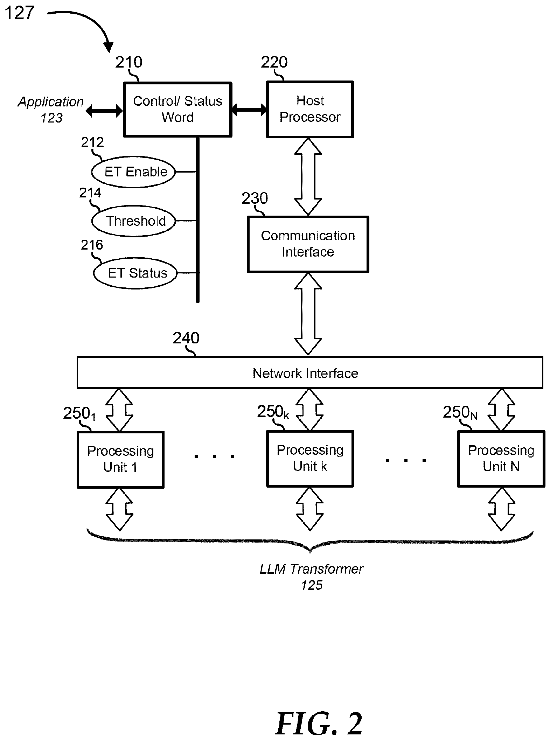

FIG. 2 is a diagram illustrating the loop exit (LE) platform 127 with multiple processing units according to an embodiment. In this configuration, the processing units (PUs) are individual units that run asynchronously. The LE platform 127 includes a storage element 210 that stores a control and status word, a host processor 220, a communication interface 230, a network interface 240, and N PUs $250_1$ to $250_N$ where N is a positive integer.

The storage element 210 may be a register or a memory location. The control and status (CS) word may be issued or read by the application 123. The CS word may include an LE Enable flag 212, a threshold 214, and an LE status 216. The LE enable flag 212 indicates whether the LE is active. It may be a single bit where 0 indicates LE is off and 1 indicates LE is on. When the LE is on, both the host processor 220 and the N PUs $250_1$ to $250_N$ are prepared to perform the LE operations which may include calculations of a similarity measure that show the similarity between successive results in the iterative procedure. The threshold 214 is a value used to compare with a similarity measure which indicates the progress of ET. As the iterative procedure approaches the end of the loop, its result may only improve slightly. The improvement may not be comparable with the computational costs. Therefore, loop exit or early termination may be employed to obtain reasonable result while saving computational resources. To determine this condition, successive results of the calculations in the iterative procedure are compared and a similarity measure is determined. If each iteration produces a result in a form of a vector including several components, the similarity measure may be computed using any suitable similarity measure such as cosine similarity. The similarity may be normalized so that it ranges from 0 to 1 where 0 indicates identical similarity and 1 indicates total dissimilarity. The calculated similarity may be adjusted to fall within this range. For example, the resulting cosine similarity measure has a value ranging from -1.0 to +1.0 where -1.0 indicates a total dissimilarity and +1.0 indicates an identical similarity. The cosine similarity $\alpha$ may be adjusted to the [0,1] range as follows:

$$S = (1 - \alpha)/2 \qquad\qquad (1)$$

The similarity measure S is compared with the threshold T. If it is less than T, it indicates that the result of the current iteration is not much different than the previous iteration and it is likely that the procedure is approaching the end of the loop. Accordingly, it is time to terminate the loop early to save computation resources.

The threshold may be fixed or variable according to the application (e.g., text, images, audio). For example, for vision applications, the threshold may be higher (to allow "early" loop exit) because images tend to have high tolerance for noise. For text applications, the threshold may be lower (to allow "late" loop exit) because texts tend to be more precise. It can also be variable or adaptive based on the progress of the learning or the nature of the output of the layers. If this nature is a broad concept, the threshold is higher (to allow "early" loop exit) because broad concepts have a higher tolerance level (e.g., "sad," "sorrowful," and "unhappy" are similar). If the nature is narrow, the threshold is lower (to allow "late" loop exit) (e.g., "Los Angeles," "Seoul," "Washington DC," "Paris" are very specific and require tighter tolerance). For example, suppose the application is textual and the process is to predict the next word. Suppose the next word to be predicted is related to "emotion" which is a broad concept, then the threshold is made higher., etc.

The LE status 216 indicates the condition of the ET. In other words, it indicates the result of the comparison of the similarity measure and the threshold. It may be a single bit to indicate whether LE has been reached. For example, if it is a 0, the LE has not been reached; if it is 1, the LE has been reached.

The host processor 220 may be any programmable device that can execute a program to work with the N PUs $250_1$ to $250_N$. It may be a high-performance microprocessor, a graphics processing unit (GPU), a programmable Applications Specific Integrated Circuit (ASIC), a Field Programmable Gate Array (FPGA). The communication interface 230 allows communication between the host processor 220 and any one of the PUs $250_1$ to $250_N$. It may include a direct memory access (DMA), an interrupt mechanism, a double buffered memory, bidirectional bus transceivers, or any elements or functionalities that allow asynchronous communication between two processors. The network interface 240 provides another interface to allow the PUs $250_1$ to $250_N$ to exchange information another themselves or with the host processor. In one embodiment, the network interface 240 may be the Internet or a local area network. Any one of the PUs $250_1$ to $250_N$ may be referred to as a network processing unit (NPU).

A PU $250_k$ (k = 1, ..., N) may be a high-performance microprocessor, a graphics processing unit (GPU), a programmable Applications Specific Integrated Circuit (ASIC), a Field Programmable Gate Array (FPGA), a microcontroller, a signal processor, an image processor, or any programmable device or circuit that can perform calculations fast. The N PUs $250_1$ to $250_N$ may work independently with each other or collaborate to perform some common tasks. They may form a multiprocessor system and operate synchronously or asynchronously. In one embodiment, the N PUs $250_1$ to $250_N$ may represent threads in a multi-thread environment. They may also be software functionalities. In addition, N PUs $250_1$ to $250_N$ may be a mixture of hardware and software elements. They interact with the LLM Transformer 125.

The communication between the host processor and the N PUs $250_1$ to $250_N$ may be parallel and asynchronous where a processor may issue commands, push reports, update statuses, or send notices independently of the others. Similarly, they may also retrieve or pull reports, read statuses, and receive notices independently of the others. The N PUs $250_1$ to $250_N$ may share workload among themselves according to the control of the host processor 220. The workload and commands may be configured and prepared by the development environment 110. By providing a parallel and asynchronous operating environment, the overall throughput may be increased. In particular, when the N PUs $250_1$ to $250_N$ participate in the calculations in the processing chain of the LLM Transformer 125, each may be assigned tasks that contribute to the overall system performance. For example, a matrix multiplication problem may be decomposed into multiple row and column multiplications and one of the multiple row and column multiplications may be assigned to a PU $250_k$. When there is no dependency among these calculations, they can be executed in parallel.

To increase communication throughput, each of the host processor 220 and the N has its own command queue and report queue. These queues are dynamically changed and provide buffered data so that they can be updated asynchronously. In a typical environment, the host processor 220 maintains its command queue to buffer commands provided by the application 123. It will dispatch the commands to the N PUs $250_1$ to $250_N$ according to some specified schedule. The dispatch may be conditioned on the status contained in reports stored in the report queue. It will also retrieve reports from the report queue. These reports are sent by the N PUs $250_1$ to $250_N$ and contain status of the operations performed by the PUs.

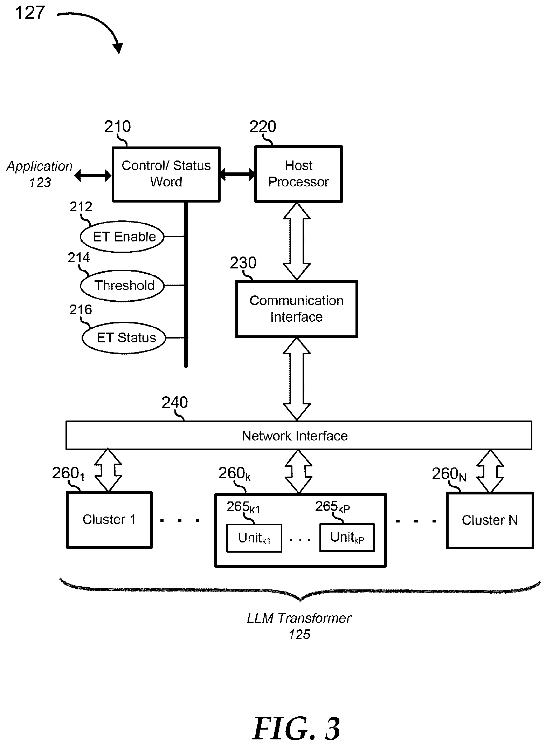

FIG. 3 is a diagram illustrating an LE platform 127 with multiple clusters of processing units according to an embodiment. The configuration of the LE platform 127 in FIG. 3 is almost identical to that of in FIG. 2. The main difference is that the individual PU 250k is replaced by a cluster k $260_k$ (k=1, ..., N). A cluster is a group of PUs from the same or different die. In each cluster $260_k$, there may be P PUs $265_{k1}$ to $265_{kP}$. The PUs in the same cluster may operate synchronously. They may perform identical operations but on different data.

By having synchronous PUs in each cluster and asynchronous clusters, the LE platform 127 may provide optimized performance with high flexibility. In addition, the PUs in each cluster may send a common report to the host processor 220 and the host processor 220 may send a command to each cluster. This will reduce the traffic at the network interface 240 and the communication interface 230 significantly.

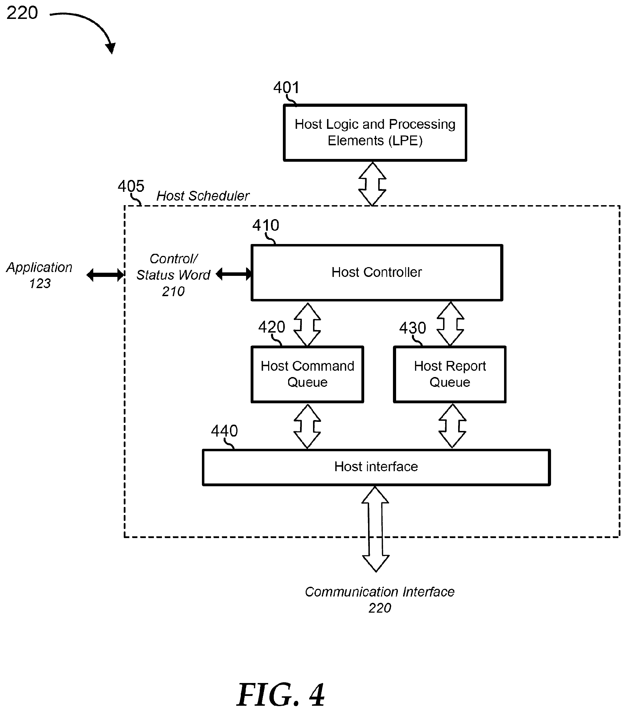

FIG. 4 is a diagram illustrating the host processor 220 according to an embodiment. The host processor 220 includes a host logic and processing elements (LPE) 401 and a host scheduler 405. The host processor 220 may include more or less than the above elements.

The host LPE 401 includes all elements that are not involved in LE processing. It may include a programmable executable element and memory and input/output (IO) interfaces to IO devices. The memory may include instructions or program that, when executed by the programmable element, cause the programmable element to perform operations described in the following.

The host scheduler 405 schedules the activities involving LE. It may include a host controller 410, a host command queue 420, a host report queue 430, and a host interface 440. The host interface 440 directly communicates with the communication interface 220. The host scheduler 405 may include more or less than the above components.

The host controller 410 controls all activities within the host scheduler 405. It may be a programmable processor that can execute instructions or programs described in the following. These instructions or programs may be fetched from the memory in the host LPE 401. The host controller 410 may read the CS word 210 to obtain values of the LE enable flag 212, threshold 214. It may also update the LE status 216 based on the report from the host report queue 430. The host command queue 420 stores commands sent from the application 123 or the development environment 110. These commands may include instructions to carry out a task, to perform calculations, or to check status. The host controller 410 may also fetch commands from the host command queue 420 to send to the PUs $250_k$ or the clusters $260_k$. The host report queue 430 stores reports sent by the PUs $250_k$ or the clusters $260_k$. The reports may contain the status of the operations in the iterative procedure. The report may contain the identifier (ID) of the PU so that the host processor will know where it comes from and will act accordingly. In particular, when a report contains the status of the LE that indicates the LE has been met, the host processor 220 will identify the sending PU and will provide advice or send commands to the sending PU. The host interface 440 provides an interface to the communication interface 220. It may include various components for communication such as buffers, bidirectional drivers, and local storage. If these components are available in the communication interface 220, the host interface 440 may not be needed.

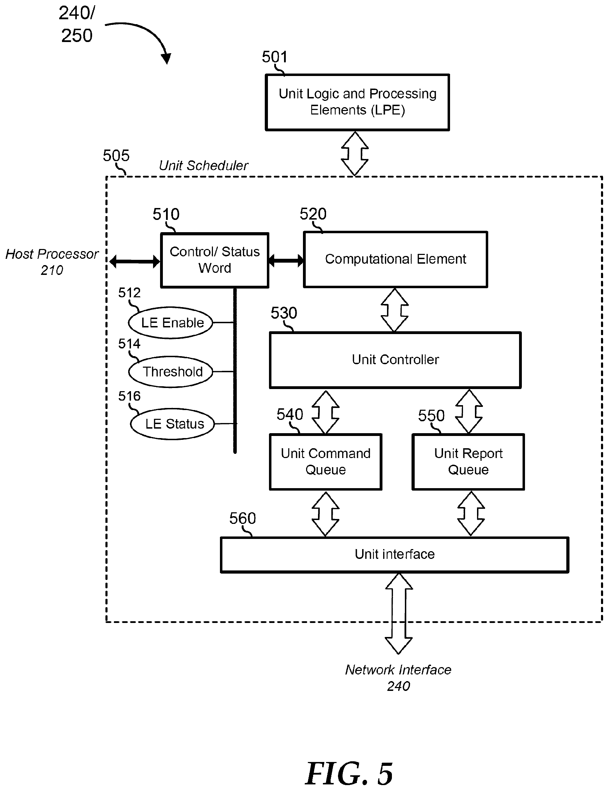

FIG. 5 is a diagram illustrating the processing unit (PU) $250_k$ and $265_k$ according to an embodiment. For clarity the subscript may be dropped. The PU 250/265 may include a unit logic and processing elements (LPE) 501 and a unit scheduler 505. The PU 250/265 may include more or less than the above elements.

The unit LPE 501 includes all elements that are not involved in LE processing. It may include a programmable executable element and memory and input/output (IO) interfaces to IO devices. The memory may include instructions or program that, when executed by the programmable element, cause the programmable element to perform operations described in the following.

The unit scheduler 505 schedules the activities involving LE. It may include a storage element 510, a computational element 520, a unit controller 530, a unit command queue 540, a unit report queue 550, and a unit interface 560. The unit interface 440 directly communicates with the network interface 240. The unit scheduler 505 may include more or less than the above components.

The storage element 510 may be a register or a memory that stores a control/status (CS) word. The CS word 510 includes an LE Enable flag 512, threshold 514, and LE status 516 from the application 123. These elements have the same functions as the LE Enable flag 212, the threshold 214, and the LE status 216, but they are kept private in the PU 250/265 to allow fast access.

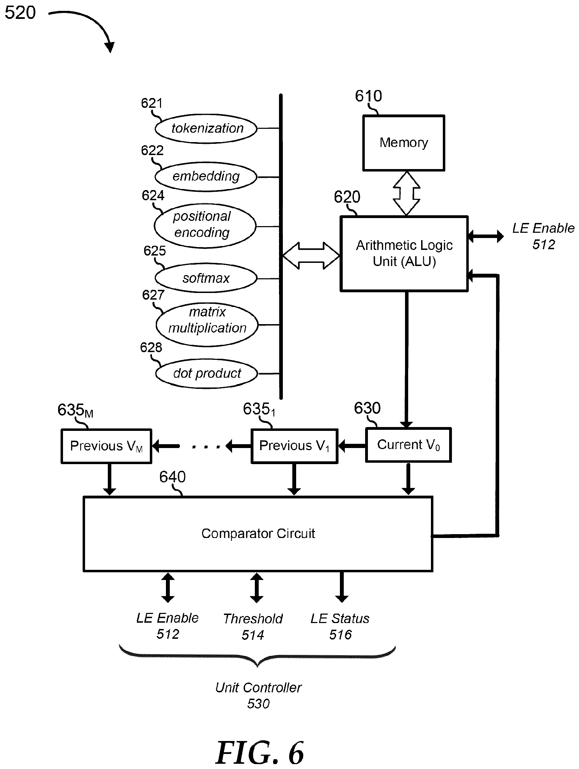

The computational element 520 performs computations in the iterative procedure and the LE processing. It will be further described in FIG. 6. The unit controller 530 controls all activities within the unit scheduler 505. It may be a programmable processor that can execute instructions or programs described in the following. These instructions or programs may be fetched from the memory in the unit LPE 501. The unit controller 530 may read the CS word 510 to obtain values of the LE enable flag 512 and threshold 514. It may also update the LE status 516 based on the result of the computational element 520. The unit command queue 540 stores commands sent from the host processor 220. These commands may include instructions to carry out a task, to perform calculations, or to check status. The unit report queue 550 stores reports completed by the unit controller 530 that reflects the status of the operations performed by the computational element 520. The reports may contain the status of the operations in the iterative procedure. The report may contain the identifier (ID) of the PU 250/260 so that when it is sent to the host processor 220, the host processor 220 will know where it comes from and will act accordingly. In particular, when a report contains the status of the LE that indicates the LE has been met, the host processor 220 will identify the sending PU 250/260 and will provide advice or send commands to the sending PU 250/260. The unit interface 560 provides an interface to the network interface 240. It may include various components for communication such as buffers, bidirectional drivers, and local storage. If these components are available in the network interface 240, the unit interface 560 may not be needed.

FIG. 6 is a diagram illustrating the computational element 520 in a PU 250/260 according to an embodiment. The computational element 520 may include a memory 610, an arithmetic logic unit (ALU) 620, a storage element 630, and M storage elements $635_1$ to $635_M$, and a comparator circuit 640. The computational element 520 may include more or less than the above elements.

The memory 610 stores data used in the computations in the iterative procedure. These data may include parameters obtained from the LLM Transformer 125 such as the values of the vectors in the encoder or decoder, the values of the matrices, etc. It may also store temporary data produced during the computations. It may also include instructions to the ALU 620.

The ALU 620 receives the LE Enable Flag 512 so that it can gate or steer result of the computations to the registers 630, $635_1$ to $635_M$. If the LE is not enabled, then the registers 630, $635_1$ to $635_M$ and the comparator circuit 640 are not used. If the LE is enabled, then the registers 630, $635_1$ to $635_M$ and the comparator circuit 640 are used to determine if LE has been reached. The ALU 620 is designed to perform the calculations in the iterative procedure. These calculations may include tokenization 621, embedding 622, positional encoding 624, softmax 625, matrix multiplication 627, and dot product 628. This list is merely an example. Additional computations or logic operations may be performed by the ALU 620.

The register 630 stores the current result vector $V_0$. The registers $635_1$ to $635_M$ store past result vectors $V_1$ to $V_M$. The registers 630 and $635_1$ to $635_M$ are arranged as a shift register such that after an iteration, the values in each register are shifted to the register to its left: $V_M \leftarrow V_{M-1}, ..., V_1 \leftarrow V_0$, and the $V_0$ will be loaded with the new (current) result such that the registers always store the most recent M past results. Typically, to determine if LE has reached, the comparator circuit 640 may need to compare only the current result $V_0$ and the immediately previous result V1. However, sometimes it is better to examine the past M results to determine if the trend is indeed the correct trend. In other words, by examining M past results instead of only the single previous result, the comparator circuit 640 may avoid errors due to noisy results. Alternatively, the comparator circuit 640 may determine the average of the past M results and use this average value to compare with the current value $V_0$ to determine the similarity measure.

Depending on the type of similarity measure, the similarity measure S may be adjusted or scaled to within the range for thresholding. For example, as mentioned above in equation (1), if the similarity is the cosine similarity having a range [-1, +1], then equation (1) can be used to scale the value S to the range [0, 1] where 0 corresponds to identical similarity and 1 corresponds to total dissimilarity. If the scaled similarity measure is less than the threshold T, then LE has been reached and the LE status 516 is asserted.

Numerical example: The following is a numerical example to illustrate the computation of the similarity measure. For this example, suppose the output result of each iteration is a vector having three components (x1, x2, x3). The cosine similarity $\alpha$ between vector Vx and Vy is equal to the ratio of the dot product of Vx and Vy and the product of their magnitudes. The LE similarity is given in equation (1): $S = (1-\alpha)/2$. Table 1 shows the values of the six most recent vectors. Suppose the threshold value is T = 0.001.

Table 1: Values of V0 to V5 and the resulting similarity

| Vector | x1 | x2 | x3 | Dot product | Magnitude | Cosine Similarity | LE Similarity |
|--------|------|------|------|-------------|-----------|-------------------|---------------|
| V0 | -0.3214 | 1.1352 | 0.8312 | 2.5105 | 1.4432 | 0.9991 | 0.0004 |
| V1 | -0.4521 | 1.3400 | 1.0154 | -1.3303 | 1.7410 | -0.4800 | 0.7400 |
| V2 | -0.5368 | -1.4529 | 0.3682 | 0.8201 | 1.5921 | 0.3960 | 0.3020 |
| V3 | 0.8743 | -0.7275 | 0.6314 | -0.8948 | 1.3009 | -0.4702 | 0.7351 |
| V4 | -0.4928 | -0.4821 | -1.2903 | -2.0941 | 1.4629 | -0.7576 | 0.8788 |
| V5 | 1.1827 | -0.5375 | 1.3721 | 0.0035 | 1.8895 | | |

In Table 1, V0 is the current vector at time t=0, V1 is the vector at time t=-1, V2 at time t=-2, etc. The dot product of V0 and V1 is 2.5105, of V1 and V2 is -1.3303, etc. The cosine similarity between V0 and V1, V1 and V2, V2 and V3, V3 and V4, V4 and V5 are 0.9991, -0.48, 0.396, -0.4702, -07576, respectively. Looking at the values of V1 through V5, it appears that the iterative procedure is not stabilized because the values vary significantly, as reflected by the S similarity. However, suppose due to some noisy condition, V0 and V1 are very similar having the resulting S value to be 0.0004. This value exceeds the threshold T = 0.001. Therefore, the comparator 640 may declare LE has been reached. In reality, this is due to a noise condition.

When the average value is used, the result is markedly different. Suppose the average value is computed over V1, V2, V3, V4, and V5. This value is then compared with V0. Table 2 shows the result.

Table 2: Using average value to determine similarity.

| Vector | x1 | x2 | x3 | Dot product | Magnitude | Cosine Similarity | LE Similarity |
|---|---|---|---|---|---|---|---|
| V0 | -0.3214 | 1.1352 | 0.8312 | -0.1107 | 1.4432 | -0.1340 | 0.5670 |
| Avg V1:V5 | 0.1151 | -0.3720 | 0.4194 | 0.3100 | 0.5723 | | |

As seen from Table 2, the similarity measure S now becomes 0.567, significantly different from 0.0004. This example illustrates that it is beneficial to filter the result values before using them to calculate the similarity.

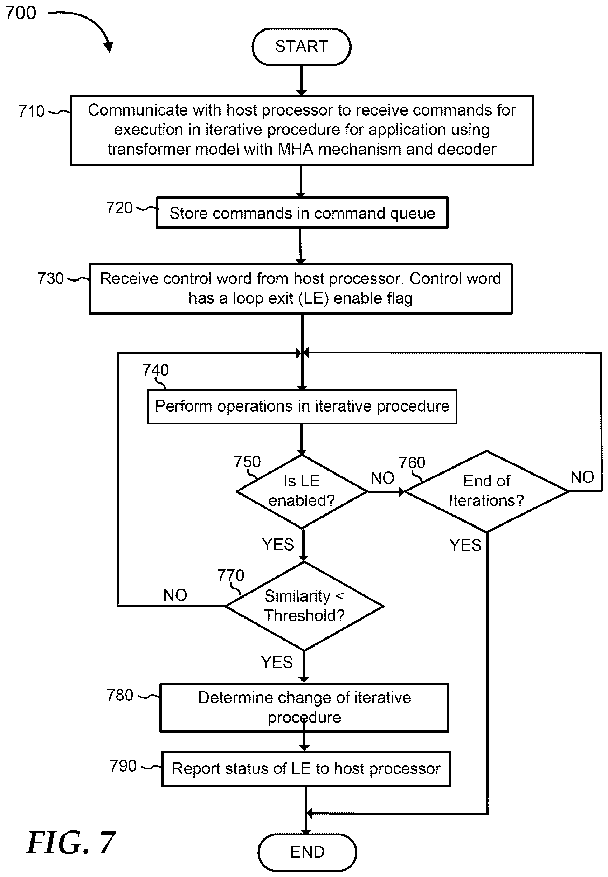

FIG. 7 is a flowchart illustrating an LE process 700 at a PU according to an embodiment. Upon START, the process 700 communicates with a host processor to receive commands for execution in an iterative procedure for an application using a transformer model with a multi-head attention (MHA) mechanism and a decoder (Block 710). The host processor may issue a command or commands to the PU. Then, the process 700 stores the commands in a command queue (Block 720). Next, the process 700 receives a control word from the host processor (Block 730). The control word includes at least a threshold and a loop exit (LE) enable flag. This flag, when asserted, indicates the LE is enabled during the iterative procedure. The LE is from a comparison between a similarity measure and a threshold

Next, the process 700 performs operations in the iterative procedure (Block 740). These operations may include calculations in the encoder - decoder operations of the LLM transformer 125 such as tokenization, matrix multiplication, softmax, etc. The, the process 700 determines if the LE is enabled or the LE flag bit is asserted (Block 750). If not, the process 700 determines if the current iteration if the end of the iterative procedure (Block 760). If not (NO on branch at block 760), the process 700 returns to block 740 to continue the process. If it's the end of the loop (YES branch on block 760), the process 700 is terminated.

If LE is enabled (YES branch on block 750), the process 700 determines if a similarity measure is less than the threshold (Block 660). The similarity measure is obtained from successive results of the decoder in the iterative procedure. The threshold is dependent on the application and may be set adaptively. If the similarity measure is not less than the threshold, the process 700 returns to block 740 to continue the next operation or the next iteration. The process 700 may also go to block 760 to determine if the end of iterations has been reached. However, since LE is most likely reached prior to the end of the loop, block 760 may not be necessary. If the similarity measure is less than the threshold, the process 700 determines a change or a stop of the iterative procedure based on a loop exit of the operations and the LE enable flag (Block 780). Next, the process 700 reports status of the LE to the host processor (Block 790) and is then terminated.

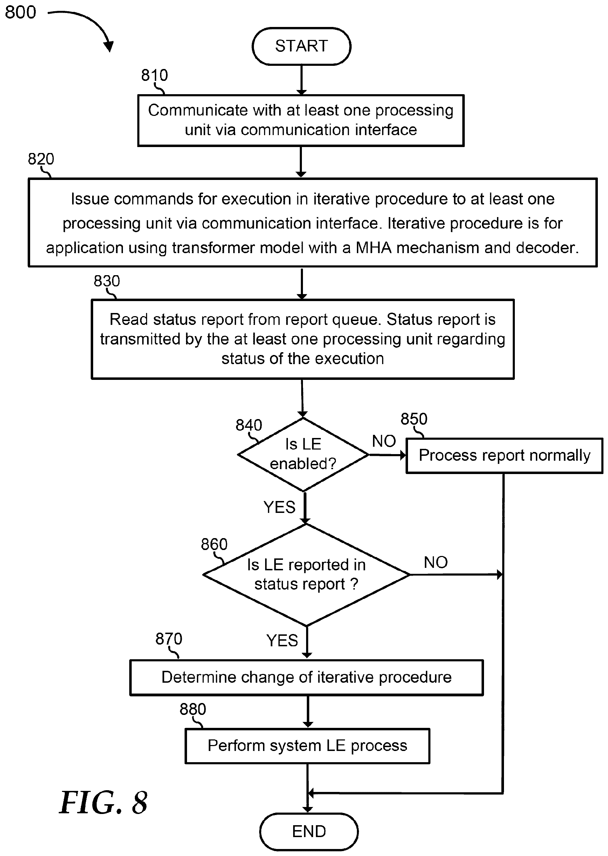

FIG. 8 is a diagram illustrating an LE process 800 at a host processor according to an embodiment. The LE process 800 typically runs in parallel with the LE process 700 in an asynchronous manner. Upon START, the process 800 communicates with at least one processing unit via a communication interface (Block 810). The communication interface may be a direct memory access (DMA), a bidirectional buffer, an interrupt mechanism, or any other structures that allow the host processor to communicate with the PU. Next, the process 800 issues commands for execution in an iterative procedure from a command queue to at least one processing unit via the communication interface (Block 820). The commands may be preloaded in the host command queue. The iterative procedure may be for an application using a transformer model with a multi-head attention (MHA) mechanism and a decoder.

Then, the process 800 reads a status report from a report queue (Block 830). The status report is transmitted by the at least one processing unit regarding status of the execution. Next, the process 800 determines if the LE enable word or bit is asserted, i.e., LE is turned on (Block 840). If not (the NO branch at block 840), the process 800 processes the report in a normal fashion (Block 850) and is then terminated. Otherwise (the YES branch at block 840), the process 800 determines if the status report indicates that an LE has been affirmed (Block 860). The LE is from a comparison between a similarity measure and a threshold. The similarity measure is obtained from successive results of the decoder in the iterative procedure. The threshold is dependent on the application. The threshold may be fixed or adaptive. If the status report indicates that an LE has not been affirmed (the NO branch at block 860), the process 800 is terminated. Otherwise (the YES branch at block 860), the process 800 determines a change or a stop of the iterative procedure (Block 870).

Then, the process 800 performs a system LE process (Block 880). This may include any operations that the application wants to be performed such as continuing the calculations on the next stage of the transformer, generating a response to the query, etc. The process 800 is then terminated.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1.  A device comprising:

    a device command queue configured to store commands for execution in an iterative procedure for an application using a transformer model with a multi-head attention, MHA, mechanism and a decoder;
    a device report queue configured to store status reports on the execution of the commands;
    an interface configured to communicate with a host processor to receive the commands and to transmit the status reports; and
    a device controller configured to determine a change of the iterative procedure based on a loop exit condition being met,
    wherein the device controller reports the loop exit condition in the device report queue.

2.  The device of claim 1, wherein the loop exit condition is from a comparison between a similarity measure and a threshold.

3.  The device of claim 2, wherein the similarity measure is determined by a cosine similarity.

4. The device of claim 2, wherein the similarity measure is obtained from at least one result of the decoder in the iterative procedure.

5. The device of any one of claims 1 to 4, wherein the threshold is based at least in part on the application.

6. The device of any one of claims 1 to 5, wherein the threshold is set adaptively.

7. The device of any one of claims 1 to 6 further comprising:
a computational element configured to perform calculations in the iterative procedure and the loop exit condition.

8. The device of any one of claims 1 to 7, wherein the host processor includes a host scheduler having a host command queue to store the commands and a host report queue configured to store the status reports on the execution of the commands.

9. The device of claim 8, wherein the host scheduler issues the commands from the host command queue.

10. The device of claim 8 or 9, wherein the host scheduler reads the status reports and determines the change of the iterative procedure.

11. A method comprising:

communicating with a host processor to receive commands for execution in an iterative procedure for an application using a transformer model with a multi-head attention, MHA, mechanism and a decoder;
storing the commands in a device command queue;
receiving a control word from the host processor, the control word having a loop exit, LE, enable flag;
performing operations in the iterative procedure;
determining a change of the iterative procedure based on an LE condition of the operations being met and the LE enable flag; and
reporting status of the LE condition to the host processor.

12. The method of claim 11, wherein the loop exit condition is from a comparison between a similarity measure and a threshold.

13. The method of claim 12, wherein the similarity measure is determined by a cosine similarity.

14. The method of claim 12, wherein the similarity measure is obtained from at least one result of the decoder in the iterative procedure.

15. The method of any one of claims 11 to 14, wherein the threshold is based at least in part on the application.

**100**

**110** Development Environment

**112** Software Framework

**114** Compiler

**116** Instruction Formatter

**120** Operating Environment

**123** Application

**125** LLM Transformer

**127** Loop Exit Platform

*FIG. 1*

127

210

Application
123

Control/ Status
Word

220

Host
Processor

212

ET Enable

214

Threshold

216

ET Status

230

Communication
Interface

240

Network Interface

$250_1$

Processing
Unit 1

. . .

$250_k$

Processing
Unit k

. . .

$250_N$

Processing
Unit N

LLM Transformer
125

*FIG. 2*

**FIG. 3**

**220**

401

Host Logic and Processing
Elements (LPE)

405  *Host Scheduler*

410

*Application
123*

*Control/
Status Word
210*

Host Controller

420

Host Command
Queue

430

Host Report
Queue

440

Host interface

*Communication Interface
220*

*FIG. 4*

240/
250

501

Unit Logic and Processing
Elements (LPE)

505 Unit Scheduler

510

Host Processor
210

Control/ Status
Word

520

Computational Element

512

LE Enable

514

Threshold

516

LE Status

530

Unit Controller

540

Unit Command
Queue

550

Unit Report
Queue

560

Unit interface

Network Interface
240

*FIG. 5*

520

621 tokenization
622 embedding
624 positional encoding
625 softmax
627 matrix multiplication
628 dot product

610 Memory

620 Arithmetic Logic Unit (ALU)

LE Enable 512

630 Current V₀
635₁ Previous V₁
635M Previous VM

640 Comparator Circuit

LE Enable 512    Threshold 514    LE Status 516

Unit Controller 530

*FIG. 6*

700

START

710 — Communicate with host processor to receive commands for execution in iterative procedure for application using transformer model with MHA mechanism and decoder

720 — Store commands in command queue

730 — Receive control word from host processor. Control word has a loop exit (LE) enable flag

740

Perform operations in iterative procedure

750 — Is LE enabled? — NO → 760 — End of Iterations? — NO

YES

YES

770 — NO ← Similarity < Threshold?

YES

780 — Determine change of iterative procedure

790 — Report status of LE to host processor

END

*FIG. 7*

800

START

810
Communicate with at least one processing
unit via communication interface

820
Issue commands for execution in iterative procedure to at least one
processing unit via communication interface. Iterative procedure is for
application using transformer model with a MHA mechanism and decoder.

830
Read status report from report queue. Status report is
transmitted by the at least one processing unit regarding
status of the execution

840
Is LE
enabled?

850
NO → Process report normally

YES

860
Is LE reported in
status report ?

NO →

870
YES

Determine change of iterative procedure

880
Perform system LE process

*FIG. 8*

END

| | Europäisches Patentamt European Patent Office Office européen des brevets | **EUROPEAN SEARCH REPORT** | **Application Number** EP 24 21 6040 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Schuster Tal ET AL: "Confident Adaptive Language Modeling", , 1 July 2022 (2022-07-01), XP093259096, Retrieved from the Internet: URL:https://proceedings.neurips.cc/paper_files/paper/2022/file/6fac9e316a4ae75ea244ddcef1982c71-Paper-Conference.pdf * the whole document * ----- | 1-15 | INV. G06N3/0455 |

| | |
|---|---|
| | **TECHNICAL FIELDS SEARCHED (IPC)** |
| | G06N |

The present search report has been drawn up for all claims

| Place of search | Date of completion of the search | Examiner |
|---|---|---|
| The Hague | 14 March 2025 | Dewyn, Torkild |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document